# EUROPÄISCHE PATENTSCHRIFT

(11) **EP 4 241 016 B1**
(45) Veröffentlichungstag und Bekanntmachung des Hinweises auf die Patenterteilung: **31.12.2025**
(21) Anmeldenummer: 21802629.2
(22) Anmeldetag: 28.10.2021
(51) Int. Cl.: F21V 8/00, B32B 17/10, B32B 17/06, B32B 27/30, B32B 27/32, B32B 27/36

(54) **VERGLASUNG**
GLAZING
VITRAGE

(30) Priorität: 05.11.2020 EP 20205858
(43) Veröffentlichungstag der Anmeldung: 13.09.2023
(73) Patentinhaber: Saint-Gobain Sekurit France, 60150 Thourotte (FR)
(72) Erfinder: NIELSEN, Tobias, 50670 Köln (DE); MOORAJ, Semjon, 52070 Aachen (DE)
(74) Vertreter: Obermair, Christian Egbert
(86) Internationale Anmeldenummer: PCT/EP2021/080003
(87) Internationale Veröffentlichungsnummer: WO 2022/096365

(56) Entgegenhaltungen:
- WO-A1-2008/047442
- JP-A- 2011 086 547
- JP-A- 2015 043 321

## Beschreibung

Die Erfindung betrifft eine beleuchtbare oder beleuchtete Verglasung, bevorzugt als Einzelscheibe oder Verbundscheibe und insbesondere eine Dachscheibe.

Bei beleuchteten Verglasungen oder Lichtverteilungssystemen wird üblicherweise Licht unter Ausnutzung des Effekts der Totalreflexion in einen flächigen Lichterleiter der Verglasung eingekoppelt, was beispielsweise aus der WO 2008/047442 A1, der JP 2011 086547 A oder der JP 2015 043321 A bekannt ist.

Aus WO 2010/049638 A1, WO 2013/053629 A1, WO 2014/060409 A1 oder WO 2015/095288 A2 ist bekannt, Licht über die Seitenfläche (auch Seitenkante genannt) einer Glasscheibe einzukoppeln. Wenn die Lichtquelle sehr nah an der Glaskante platziert wird, kann auf diese Weise sehr effizient und über die gesamte Breite des Lichtleiters Licht in den Lichtleiter eingekoppelt werden. Dadurch kann eine sehr homogene flächige Beleuchtung erreicht werden. Dieses Prinzip ist gemeinhin bekannt und sehr verbreitet z.B. für Displayhintergrundbeleuchtungen und dekorative Beleuchtungsanwendungen.

In anderen Anwendungsfällen, beispielsweise bei einer Dachscheibe einer Fahrzeugverglasung im Automobilbereich, ist eine solche Lichteinkopplung über eine der Seitenfläche nur schwer möglich, da diese in der Karosserie des Fahrzeugs eingeklebt wird und außerdem die Scheibe typischerweise über eine rundgeschliffene Kante, den sogenannten C-Schliff, verfügt. Da die Seitenfläche für eine möglichst effiziente Lichteinkopplung möglichst glatt sein muss, ist ein aufwendiges Glätten und ein Polieren oder eine andere besondere Bearbeitung der Seitenfläche erforderlich.

Aus WO 2013/110885 A1, WO 2018/178591 A1 oder WO 2019/105855 A1 ist bekannt, Lichtquellen in Ausnehmungen, beispielsweise in mechanisch gebohrte Löcher, einzusetzen und dadurch Licht in die Glasscheibe einzukoppeln. Allerdings ist durch die punktuelle Lichteinkopplung eine homogene Beleuchtung der gesamten Scheibe erschwert. Des Weiteren ist der Rand der Bohrung technisch bedingt matt, was die ebenfalls die Effizienz der Lichteinkopplung verringert. Zusätzlich führen die Bohrungen zu einer mechanischen Schwächung Verglasung.

In der WO 2014/060409 A1 wird eine zusätzliche Einfachsicherheitsscheibe mittels einer Ummantelung oder eines Gehäuses unter der eigentlichen Verbundglasscheibe angebracht, deren einzige Funktion die eines Lichtleiters darstellt. Dies führt zu einem erheblichen Mehraufwand bei der Produktion und zusätzlichem Gewicht und Platzbedarf der gesamten Dachscheibe.

Die Aufgabe der vorliegenden Erfindung besteht nunmehr darin, eine verbesserte Verglasung bereitzustellen, der einfach und kostengünstig hergestellt werden kann und eine besonders effiziente Beleuchtung der Verglasung ermöglicht.

Die Aufgabe der vorliegenden Erfindung wird erfindungsgemäß durch eine Verglasung gemäß dem unabhängigen Anspruch 1 gelöst. Bevorzugte Ausführungen gehen aus den Unteransprüchen hervor.

Die erfindungsgemäße Verglasung umfasst zumindest die folgenden Merkmale:
- mindestens eine erste Scheibe mit einer ersten Hauptoberfläche und einer zweiten Hauptoberfläche,
- mindestens eine Lichtquelle,
- mindestens ein, bevorzugt transparentes, Lichteinkopplungsmittel,
   wobei die Lichtquelle über das Lichteinkopplungsmittel mit der ersten Hauptoberfläche der ersten Scheibe verbunden ist, so dass Licht der Lichtquelle in die erste Scheibe eingekoppelt werden kann, und
- mindestens ein Lichtauskopplungsmittel, zum Auskoppeln von Licht aus der ersten Scheibe über mindestens eine der Hauptoberflächen.

Als transparent im Sinne der Erfindung wird ein Gegenstand, insbesondere ein Lichteinkopplungsmittel, ein Lichtauskopplungsmittel, eine Scheibe und/oder ein transparenter Körper, verstanden, welcher eine Transmission im sichtbaren Spektralbereich von größer 20%, bevorzugt größer 50%, besonders bevorzugt von größer 70 %, insbesondere von größer 85 % aufweist.

In einer vorteilhaften Ausgestaltung der erfindungsgemäßen Verglasung ist das Lichteinkopplungsmittel dazu geeignet, einen Teil des von der Lichtquelle eintreffenden Lichts in Transmission durch Streuung, Reflexion, Brechung oder Beugung abzulenken.

In einer weiteren vorteilhaften Ausgestaltung der erfindungsgemäßen Verglasung ist das Lichteinkopplungsmittel geeignet, einen Teil des von der Lichtquelle eintreffenden Lichts unter einem Winkel θ größer oder gleich dem Winkel θₜₒₜₐₗ der Totalreflexion in der ersten Scheibe in die erste Scheibe einzukoppeln. Der Winkel θ ist dabei der Einfalls- bzw. Ausfallswinkel bezüglich des Lots auf die Scheiben-Hauptoberfläche. Vorteilhafterweise ist der Anteil des von der Lichtquelle unter einem Winkel θ größer oder gleich dem Winkel θₜₒₜₐₗ der Totalreflexion in die erste Scheibe eingekoppelten Lichts, durch das Lichteinkopplungsmittel um einen Faktor von mindestens 50, bevorzugt mindestens 200 erhöht.

In einer vorteilhaften Ausgestaltung ist das Lichteinkopplungsmittel in die erste Hauptoberfläche der ersten Scheibe eingebracht, bevorzugt durch Laserstrukturierung, mechanische Strukturierung wie Sandstrahlen, und/oder Ätzen, bevorzugt chemisches oder physikalische Ätzen. Geeignet ist dabei besonders eine flächige, unregelmäßige Oberflächenstrukturierung, die bei Beleuchtung zu einer diffusen Lichtstreuung führt. Alternativ können linienförmige oder gitterförmige (z.B. kreuzgitterförmige) Strukturen eingebracht werden.

In einer weiteren vorteilhaften Ausgestaltung Insbesondere ist das erfindungsgemäße Lichteinkopplungsmittel nicht einstückig mit der ersten Scheibe ausgebildet.

In einer alternativen vorteilhaften Ausgestaltung ist das Lichteinkopplungsmittel auf die erste Hauptoberfläche der ersten Scheibe aufgedruckt, beispielsweise durch Inkjet oder Siebdruck. Vorteilhafterweise enthält der Aufdruck Partikel, die geeignet sind Licht zu streuen, zu brechen, zu beugen oder zu reflektieren.

In einer weiteren alternativen vorteilhaften Ausgestaltung enthält das Lichteinkopplungsmittel einen transparenten Körper, der mit der ersten Hauptoberfläche der ersten Scheibe stoffschlüssig verbunden ist, beispielsweise durch Verkleben, oder besteht daraus.

Der erfindungsgemäße transparente Körper enthält bevorzugt eine strukturierte Kunststofffolie oder Kunststoffplatte, beispielsweise mit lichtstreuenden, lichtbrechenden, lichtbeugenden oder lichtreflektierenden Partikeln, eine holographische Folie, oder draus besteht. Der erfindungsgemäße transparente Körper kann auch eine flächige Anordnung von Mikroprismen, beispielsweise aus zufällig oder rasterförmig angeordneten Pyramiden oder aus linienförmig angeordneten Stufen (im Folgenden auch Stufenprisma genannt) enthalten oder daraus bestehen. Typischerweise weist der transparente Körper eine Oberflächenstruktur aus derartigen Mikroprismen auf. Derartige Mikroprismen können vorteilhafterweise durch mechanische Bearbeitung wie Stempeln oder Prägen, durch chemisches Ätzen, durch Photolithographie oder andere Transfertechniken hergestellt werden.

Der Brechungsindex n₁₀ des transparenten Körpers beträgt bevorzugt von n₁ - 0,3 bis n₁ + 0,3, besonders bevorzugt von n₁ - 0,2 bis n₁ + 0,2 und insbesondere von n₁ - 0,15 bis n₁ + 0,15, wobei n₁ der Brechungsindex der ersten Scheibe ist.

In einer weiteren alternativen vorteilhaften Ausgestaltung ist das Lichteinkopplungsmittel und insbesondere der transparente Körper ein Teil der Lichtquelle, beispielsweise ein Abschnitt des Gehäuses.

Es versteht sich, dass eine erfindungsgemäße Verglasung eine oder mehrere Lichtquellen aufweisen kann, deren Licht durch eine oder mehrere der oben beschriebenen Lichteinkopplungsmittel in die erste Scheibe eingekoppelt wird, wobei auch verschiedene Lichteinkopplungsmittel in einer Verglasung kombiniert sein können.

In einer vorteilhaften Ausgestaltung einer erfindungsgemäßen Verglasung ist die Lichtquelle dazu geeignet sichtbares Licht auszusenden. Alternativ kann sie infrarotes oder ultraviolettes Licht aussenden, welches bevorzugt durch fluoreszente oder lumineszente Partikel, bevorzugt als Bestandteil des Lichtauskoppelmittels, in sichtbares Licht gewandelt wird.

In einer vorteilhaften Ausgestaltung einer erfindungsgemäßen Verglasung enthält die Lichtquelle mindestens eine Leuchtdiode (LED, englisch light emitting diode), bevorzugt mindestens eine Organische Leuchtdiode (OLED, organic englisch light emitting diode), mindestens eine Laserdiode, mindestens eine Glühlampe und/oder mindestens eine Gasentladungslampe oder daraus besteht.

In einer vorteilhaften Ausgestaltung der erfindungsgemäßen Verglasung ist das Lichtauskopplungsmittel dazu geeignet, einen Teil des in der ersten Scheibe geleiteten Lichts, bevorzugt durch Streuung, Reflexion, Brechung oder Beugung, an wenigstens einer der Hauptoberflächen der ersten Scheibe auszukoppeln.

Vorteilhafterweise ist das Lichtauskopplungsmittel in die erste Hauptoberfläche und/oder in die zweite Hauptoberfläche und/oder innerhalb der ersten Scheibe angeordnet oder eingebracht.

Dazu ist das Lichtauskopplungsmittel bevorzugt durch Laserstrukturierung, mechanische Strukturierung wie Sandstrahlen, und/oder durch Ätzen in die erste Hauptoberfläche und/oder in die zweite Hauptoberfläche eingebracht.

Alternativ oder in Kombination kann das Lichtauskopplungsmittel mit der ersten Hauptoberfläche und/oder mit der zweiten Hauptoberfläche der ersten Scheibe stoffschlüssig verbunden sein, bevorzugt durch Aufdrucken oder Aufkleben einer Farbe, einer Paste oder von Partikeln, besonders bevorzugt von lichtstreuenden, lichtbrechenden oder lichtreflektierende Partikel.

Alternativ oder in Kombination kann das Lichtauskopplungsmittel Partikel, besonders bevorzugt von lichtstreuenden, lichtbrechenden, lichtbeugenden oder lichtreflektierende Partikel oder Kavitäten umfassen oder daraus bestehen, die innerhalb der ersten Scheibe angeordnet sind.

Alternativ oder in Kombination kann das Lichtauskopplungsmittel mindestens einen transparenten Körper enthalten oder daraus bestehen, der mit der ersten oder zweiten Hauptoberfläche der ersten Scheibe stoffschlüssig verbunden ist, beispielsweise durch Verkleben, wobei der transparente Körper bevorzugt
a) eine strukturierte Kunststofffolie oder Kunststoffplatte oder
b) eine transmissions-holographische Folie

enthält oder draus besteht.
Vorteilhafterweise weist die strukturierte Kunststofffolie oder Kunststoffplatte eine flächige Anordnung von Mikroprismen wie ein Stufenprisma auf.

Alternativ oder in Kombination kann das Lichtauskopplungsmittel ein reflektierender Körper sein, der mit der zweiten oder der ersten Hauptoberfläche der ersten Scheibe stoffschlüssig verbunden ist, beispielsweise durch Verkleben, wobei der reflektierende Körper bevorzugt
a) eine strukturierte Kunststofffolie oder Kunststoffplatte oder
b) eine transmissions-holographische Folie
enthält oder draus besteht. Vorteilhafterweise weist die strukturierte Kunststofffolie oder Kunststoffplatte eine flächige Anordnung von Mikroprismen wie ein Stufenprisma auf.

Ist ein derartiges Lichtauskopplungsmittel beispielsweise auf der zweiten Hauptoberfläche der ersten Scheibe angeordnet, so wird das Licht beispielsweise über die erste Hauptoberfläche ausgekoppelt und ist hauptsächlich von einem Beobachter, der die erste Scheibe über die erste Hauptoberfläche betrachtet, zu erkennen.

Alternativ oder in Kombination kann das Lichtauskopplungsmittel ein transparenter Körper sein, der mit der ersten oder der zweiten Hauptoberfläche der ersten Scheibe, bevorzugt stoffschlüssig, verbunden ist, beispielsweise durch Verkleben. Vorteilhafterweise enthält der transparente Körper dann eine bevorzugt strukturierte, besonders bevorzugt eine diffus-streuende oder gerichtet-brechende, beispielsweise durch Mikroprismen, transparente Schicht, Kunststofffolie oder Kunststoffplatte oder daraus besteht, deren Brechungsindex n_{10'} wesentlich größer als n₁ ist. Insbesondere ist n₁₀ dann um mindestens +0,2 oder um mindestens +0,5 größer als n₁. Ein derartiges Lichtauskopplungsmittel kann beispielsweise eine aufgeraute mit Titanoxid (TiOx) beschichtete Folie sein. Ist ein derartiges Lichtauskopplungsmittel beispielsweise auf der ersten Hauptoberfläche der ersten Scheibe angeordnet, so wird das Licht beispielsweise über die erste Hauptoberfläche ausgekoppelt und ist hauptsächlich von einem Beobachter, der die erste Scheibe über die erste Hauptoberfläche betrachtet, zu erkennen.

Der erfindungsgemäße transparente Körper des Lichtauskopplungsmittels kann jeweils eine flächige Anordnung von Mikroprismen, beispielsweise aus zufällig oder rasterförmig angeordneten Pyramiden oder aus linienförmig angeordneten Stufen (im Folgenden auch Stufenprisma genannt) enthalten oder daraus bestehen. Typischerweise weist der transparente Körper eine Oberflächenstruktur aus derartigen Mikroprismen auf. Derartige Mikroprismen können vorteilhafterweise durch mechanische Bearbeitung wie Stempeln oder Prägen, durch chemisches Ätzen, durch Photolithographie oder andere Transfertechniken hergestellt werden.

Erfindungsgemäß weist die Verglasung mindestens ein Lichtverstärkungsmittel auf. Das Lichtverstärkungsmittel ist dem Lichteinkopplungsmittel bezüglich der ersten Scheibe gegenüberliegend angeordnet. Gegenüberliegend bedeutete hier bevorzugt, dass das Lichtverstärkungsmittel mindestens im Bereich der orthogonalen Projektion des Lichteinkopplungsmittels auf die erste Scheibe angeordnet ist.

Das Lichtverstärkungsmittel kann unmittelbar an der zweiten Hauptoberfläche der ersten Scheibe oder gegebenenfalls über die Zwischenschicht oder weitere Schichten, wie insbesondere mindestens eine Klebeschicht, mit der zweiten Hauptoberfläche der ersten Scheibe verbunden sein. Insbesondere ist das Lichtverstärkungsmittel nicht einstückig mit der ersten Scheibe ausgebildet.

Das erfindungsgemäße Lichtverstärkungsmittel ist insbesondere dazu geeignet, aus der ersten Scheibe austretendes Licht durch Reflexion, bevorzugt gerichtete Reflexion, Streuung, bevorzugt diffuse Streuung, oder Beugung in die erste Scheibe zurückzulenken, bevorzugt unter einem Winkel θ größer oder gleich θₜₒₜₐₗ.

Das erfindungsgemäße Lichtverstärkungsmittel ist insbesondere unmittelbar oder über eine oder mehrere Zwischenschichten mit der zweiten Hauptoberfläche der ersten Scheibe stoffschlüssig verbunden.

Das Lichtverstärkungsmittel enthält bevorzugt ein hochreflektierendes Spiegelelement, beispielsweise eine Metallfolie, eine metallisierte Kunststofffolie oder eine nicht-metallische Enhanced Specular Reflector-Folie (3M ESR), wie sie beispielsweise von der Firma 3M vertrieben wird, oder besteht daraus.

In einer weiteren vorteilhaften Ausgestaltung der Erfindung ist die Metallfolie eine Kupfer-, Silber-, Gold- oder Aluminiumfolie, bevorzugt mit einer Dicke von 50 µm bis 1000 µm und bevorzugt von 100 µm bis 600 µm. Es versteht sich, dass derartige Folien oder Schichten auch auf Trägerfolien, beispielsweise polymeren Trägerfolien wie Polyimid oder Polyethylenterephthalat (PET), angeordnet sein können.

Durch das hochreflektierende Spiegelelement kann ein großer Anteil von Licht, welches mit einem Winkel θ kleiner als θₜₒₜₐₗ auf das Lichtverstärkungsmittel auftritt zurück zum Lichteinkopplungsmittel gelenkt werden und dort beispielsweise unter einem anderen Winkel θ größer oder gleich θₜₒₜₐₗ in die erste Scheibe zurückgelenkt werden.

Klebeschichten oder doppelseitige Klebefolie sind in der Regel nicht perfekt planparallel, sondern weisen eine gewisse Oberflächenkorrugation auf. Durch Aufkleben des Lichtverstärkungsmittels mit einer doppelseitigen Klebefolie oder einer Klebeschicht auf die erste Scheibe, wird nur ein Teil des Lichts direkt zurückreflektiert und ein andere Teil in seinem Winkel θ verändert, so dass ein Anteil des Lichts unter einem gewünschten Winkel θ größer oder gleich θₜₒₜₐₗ in die erste Scheibe einkoppelt. Gleiches tritt auf, wenn eine Zwischenschicht, beispielsweise eine thermoplastische PVB-Folie, zwischen dem Lichtverstärkungselement und der ersten Scheibe angeordnet ist. Dieser Effekt ist bei hochreflektierenden Spiegelelementen besonders ausgeprägt.

In einer vorteilhaften erfindungsgemäßen Verglasung ist zumindest abschnittsweise, bevorzugt vollflächig, unmittelbar auf der zweiten Hauptoberfläche der ersten Scheibe eine halbdurchlässig-spiegelnde Beschichtung angeordnet. Die halbdurchlässig-spiegelnde Beschichtung (auch Einwegspiegel oder venezianischer Spiegel genannt), besteht beispielsweise aus einer oder mehreren dünnen Metalloxidschichten, die typischerweise durch Vakuum-Kathodenzerstäubung (Sputtern) auf die erste Scheibe aufgebracht werden. Die halbdurchlässig-spiegelnde Beschichtung ist im Gegensatz zu einem echten Spiegel dünn genug, um lediglich strahlteilende Eigenschaften aufzuweisen und nur einen Anteil an auftreffenden Licht zu reflektieren.

In einer vorteilhaften Ausgestaltung der Erfindung ist die Verglasung eine Einzelverglasung, beispielsweise eine Einzelscheibe.

In einer alternativen Ausgestaltung ist die erfindungsgemäße Verglasung eine Verbundscheibe. Dabei ist bevorzugt eine zweite Scheibe durch mindestens eine Zwischenschicht mit der erste Scheibe verbunden, bevorzugt durch Lamination.

Als erste Scheibe und zweite Scheibe sind im Grunde alle elektrisch isolierenden Substrate geeignet, die unter den Bedingungen der Herstellung und der Verwendung der erfindungsgemäßen Verbundscheibe thermisch und chemisch stabil sowie dimensions-stabil sind.

Die erste Scheibe und/oder, falls vorhanden, die zweite Scheibe enthalten bevorzugt Glas, besonders bevorzugt Flachglas ganz besonders bevorzugt Floatglas, wie Kalk-Natron-Glas Borosilikatglas oder Quarzglas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon, oder bestehen daraus. Die erste Scheibe und/oder zweite Scheibe sind bevorzugt transparent, insbesondere für die Verwendung der Scheiben als Windschutzscheibe oder Rückscheiben eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Insbesondere besteht zumindest die erste Scheibe und bevorzugt auch die zweite Scheibe aus Klarglas.

Für Scheiben, die nicht im verkehrsrelevanten Sichtfeld des Fahrers liegen, beispielsweise für Dachscheiben, kann die Transmission aber auch viel geringer sein, beispielsweise größer als 5 %. Dazu kann beispielsweise die zweite Scheibe und/oder die Zwischenschicht getönt oder gefärbt sein.

Die Dicke von erster Scheibe und/oder zweiter Scheibe kann breit variieren und so hervorragend den Erfordernissen des Einzelfalls angepasst werden. Vorzugsweise werden Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, verwendet. Die Größe der Scheiben kann breit variieren und richtet sich nach der Größe der erfindungsgemäßen Verwendung. Die erste Scheibe und zweite Scheibe weisen beispielsweise im Fahrzeugbau und Architekturbereich übliche Flächen von 200 cm² bis zu 20 m² auf.

Die Verglasung kann eine beliebige dreidimensionale Form aufweisen. Vorzugsweise hat die dreidimensionale Form keine Schattenzonen, so dass sie beispielsweise durch Kathodenzerstäubung mit weiteren Beschichtungen beschichtet werden kann. Bevorzugt sind die Scheiben planar oder leicht oder stark in einer Richtung oder in mehreren Richtungen des Raumes gebogen. Insbesondere werden planare Substrate verwendet. Die Scheiben können farblos oder gefärbt sein.

Die erste Scheibe und die zweite Scheibe werden im Falle einer Verbundscheibe durch mindestens eine Zwischenschicht miteinander verbunden. Die Zwischenschicht ist bevorzugt transparent oder getönt oder gefärbt. Die Zwischenschicht enthält vorzugsweise mindestens einen Kunststoff, bevorzugt Polyvinylbutyral (PVB), Ethylenvinylacetat (EVA) und / oder Polyethylenterephthalat (PET) oder besteht daraus. Die Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Die Zwischenschicht kann durch eine oder auch durch mehrere übereinander angeordnete Folien ausgebildet werden, wobei die Dicke einer Folie bevorzugt von 0,025 mm bis 1 mm beträgt, typischerweise 0,38 mm oder 0,76 mm. Die Zwischenschichten können bevorzugt thermoplastisch sein und nach der Lamination die erste Scheibe, die zweite Scheibe und eventuelle weitere Zwischenschichten miteinander verkleben. Besonders vorteilhaft sind sogenannte akustik-dämpfende Zwischenschichten, die bevorzugt aus drei Lagen PVB bestehen, wobei die mittlere Lage weicher ausgebildet ist, als die zwei äußeren Lagen.

Die Zwischenschicht kann auch eine funktionale Zwischenschicht sein, insbesondere eine Infrarotstrahlung reflektierende Zwischenschicht, eine Infrarotstrahlung absorbierende Zwischenschicht, eine UV-Strahlung absorbierende Zwischenschicht, eine zumindest abschnittsweise gefärbte Zwischenschicht und/oder eine zumindest abschnittsweise getönte Zwischenschicht. So kann die thermoplastische Zwischenschicht beispielsweise auch eine Bandfilterfolie sein.

Die Begriffe "erste Scheibe" und "zweite Scheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Verbundscheibe beispielsweise dafür vorgesehen, in einer Öffnung, beispielsweise eines Fahrzeugs oder eines Gebäudes, den Innenraum gegenüber der äußeren Umgebung abzutrennen, so kann die erste Scheibe dem Innenraum oder der äußeren Umgebung zugewandt sein.

Die erste Scheibe und/oder, falls vorhanden, die zweite Scheibe können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Des Weiteren kann die Verglasung weitere funktionelle Element, insbesondere elektronisch steuerbare optische Elemente aufweisen, beispielsweise PDLC-Elemente, Elektrochrome Elemente oder ähnliches, die typsicherweise zwischen der ersten Scheibe und der zweiten Scheibe angeordnet sind.

Ein weiterer Aspekt der Erfindung umfasst eine Verglasungsanordnung, umfassend eine erfindungsgemäße Verglasung und eine Spannungsquelle oder Steuerelektronik, die mit der Lichtquelle verbunden ist. Durch die Spannungsquelle oder Steuerelektronik kann die Lichtquelle gesteuert werden, so dass sie bei Anlegen einer Spannung Licht aussendet.

Ein weiterer Aspekt der Erfindung umfasst ein Verfahren zur Herstellung einer erfindungsgemäßen Verglasung, mindestens umfassend:
- Anordnen eines, bevorzugt lichtstreuenden, lichtreflektierenden, lichtbrechenden oder lichtbeugenden, Lichteinkopplungsmittels auf einer ersten Hauptoberfläche einer ersten Scheibe, bevorzugt durch Laserstrukturierung, mechanische Strukturierung wie Sandstrahlen, Ätzen, Beschichten, Bedrucken oder Anbringen eines transparenten Körpers,
- Anordnen von mindestens einer Lichtquelle am Lichteinkopplungsmittel sowie Anordnen von mindestens einem Lichtauskopplungsmittel an oder in der ersten Scheibe.

Die erfindungsgemäße Verglasung kann beispielsweise die Dachscheibe, Windschutzscheibe, Seitenscheibe oder Heckscheibe eines Fahrzeugs oder eine andere Fahrzeugverglasung sein, beispielsweise eine Trennscheibe in einem Fahrzeug, bevorzugt in einem Schienenfahrzeug oder einem Bus. Alternativ kann die Verglasung eine Architekturverglasung, beispielsweise in einer Außenfassade eines Gebäudes oder eine Trennscheibe im Innern eines Gebäudes, oder ein Einbauteil in Möbeln oder Geräten sein.

Ein weiterer Aspekt der Erfindung umfasst die Verwendung der erfindungsgemäßen Verglasung in Gebäuden, insbesondere im Zugangsbereich, Fensterbereich, Dachbereich oder Fassadenbereich, als Einbauteil in Möbeln und Geräten, in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und / oder Dachscheibe.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränkt die Erfindung in keiner Weise ein.

Es zeigen:
- Figur 1A: eine schematische Querschnittsdarstellung einer Ausgestaltung einer Verglasung am Beispiel einer Einzelscheibe, die außerhalb des Schutzbereichs der beanspruchten Erfindung liegt,

- Figur 1B: eine schematische Querschnittsdarstellung einer weiteren Ausgestaltung einer erfindungsgemäßen Verglasung am Beispiel einer Einzelscheibe,
- Figur 2A: lichtmikroskopische Aufnahme eines Ausgestaltungsbeispiels eines erfindungsgemäßen Lichteinkopplungsmittels,
- Figur 2B: lichtmikroskopische Aufnahme eines weiteren Ausgestaltungbeispiels eines erfindungsgemäßen Lichteinkopplungsmittels,
- Figur 3: Detailansicht einer schematischen Querschnittsdarstellung einer erfindungsgemäßen Verglasung mit einem Stufenprisma,
- Figur 4: eine schematische Querschnittsdarstellung einer weiteren Ausgestaltung einer erfindungsgemäßen Verglasung am Beispiel einer Verbundscheibe, und
- Figur 5: eine schematische Querschnittsdarstellung einer weiteren Ausgestaltung einer erfindungsgemäßen Verglasung am Beispiel einer Verbundscheibe.

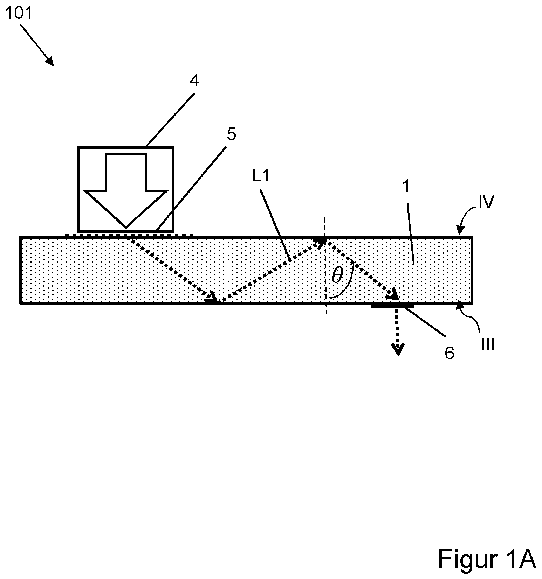

Figur 1A zeigt eine Draufsicht auf eine beispielhafte Ausgestaltung einer Verglasung 101 am Beispiel einer Einzelscheibe. Die Einzelscheibe kann beispielsweise eine Automobilverglasung, eine Bauverglasung oder Bauteil eines Möbels oder (elektrischen) Geräts sein. Beispielsweise ist die Verglasung 101 eine Dachscheibe eines Fahrzeugs. Die Verglasung 101 kann auch Teil einer Isolierverglasung sein und beispielsweise als Außen- oder Innenscheibe in einem Fenster eines Gebäudes dienen. Alternativ kann die Verglasung 101 in einem Innenraum angeordnet sein und beispielsweise eine Verglasung eines Besprechungsraums sein.

Die Verglasung 101 enthält eine Scheibe 1, die im Rahmen der vorliegenden Erfindung auch erste Scheibe 1 genannt wird. Die Abmessungen der ersten Scheibe 1 betragen beispielsweise 1,4 m x 1,5 m. Die erste Scheibe 1 besteht beispielsweise aus Kalk-Natronglas. Die Dicke der ersten Scheibe 1 beträgt beispielsweise 3 mm. Es versteht sich, dass die Dicke der ersten Scheibe 1 der jeweiligen Verwendung angepasst sein kann. Die erste Scheibe 1 kann beispielsweise vorgespannte, teilvorgespanntes oder nicht-vorgespanntes Glas enthalten. Alternativ kann die erste Scheibe 1 aus einen Kunststoff, beispielsweise aus Polycarbonat bestehen.

Die erste Scheibe 1 weist eine erste Hauptoberfläche IV auf und eine weitere gegenüberliegende zweite Hauptoberfläche III. Die erste Scheibe 1 wird weiterhin durch vier umlaufende Seitenflächen begrenzt, die orthogonal zu den Hauptoberflächen III, IV angeordnet sind.

Die Verglasung 101 umfasst eine Lichtquelle 4, beispielsweise eine Leuchtdiode (LED), die beispielsweise Licht im sichtbaren Bereich aussendet. Der Lichtstrahl der Lichtquelle 4 ist dabei in Richtung der ersten Scheibe 1 gerichtet und trifft im Wesentlichen orthogonal auf die Hauptoberfläche IV der ersten Scheibe 1.

Zwischen der Lichtquelle 4 und der ersten Scheibe 1 ist ein Lichteinkopplungsmittel 5 angeordnet, welches durch Streuung, Reflexion, Brechung oder Beugung, einen Großteil des Lichts der Lichtquelle 4 unter einen Winkel θ (theta) größer oder gleich dem Winkel der Totalreflexion θₜₒₜₐₗ in die erste Scheibe 1 einkoppelt. Der Winkel der Totalreflexion θₜₒₜₐₗ ist vom Brechungsindex des lichtleitenden Mediums abhängig und beträgt bei der vorliegenden Kalk-Natronglas-Scheibe (n = 1.52) etwa 42°.

Aufgrund des Prinzips der Totalreflexion propagiert alles unter einem Winkel θ ≥ θₜₒₜₐₗ in die erste Scheibe 1 eingekoppelte Licht verlustfrei durch die erste Scheibe 1. In der Figur 1A ist dies durch den Lichtstrahl L1 schematisch dargestellt.

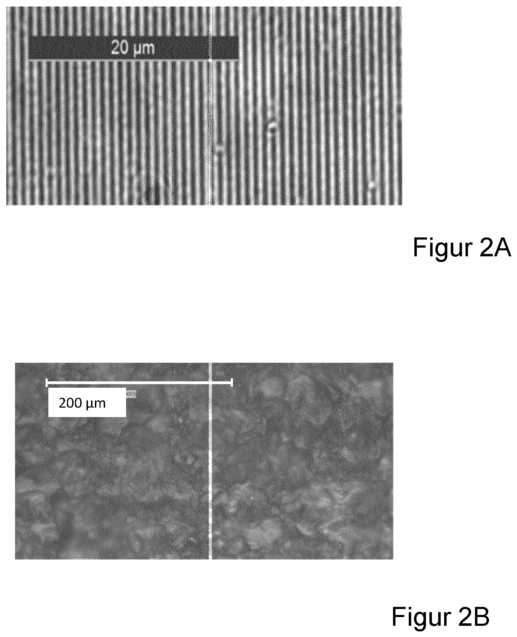

Das Lichteinkopplungsmittel 5 kann dabei unterschiedlich ausgestaltet sein. Im vorliegenden Ausgestaltungsbeispiel besteht es aus einem Bereich der Hauptoberfläche IV, in welchem durch Laserstrukturierung Streuzentren in die Hauptoberfläche IV eingebracht wurden (siehe auch Figur 2A und Figur 2B, sowie die Beschreibung dazu).

Auf der der ersten Hauptoberfläche IV gegenüberliegenden zweiten Hauptoberfläche III der ersten Scheibe 1 ist beispielsweise ein Lichtauskopplungsmittel 6 angeordnet. Das Lichtauskopplungsmittel 6 kann dabei an jeder beliebigen Stelle der Hauptoberfläche III oder der Hauptoberfläche IV angeordnet sein und ist insbesondere zum Lichteinkopplungsmittel 6 versetzt (d.h. nicht unmittelbar gegenüberliegend) angeordnet.

Als Lichtauskopplungsmittel 6 sind beispielsweise Strukturierungen der Hauptoberfläche III, IV der ersten Scheibe 1 geeignet, an der die Totalreflexion verhindert ist und Licht über die jeweilige Hauptoberfläche III, IV aus der ersten Scheibe 1 austreten kann. Alternativ kann das Lichtauskopplungsmittel 6 einen Aufdruck auf die erste Scheibe 1 oder in die erste Scheibe 1 eingebrachte lichtstreuende, lichtbrechende, lichtbeugende oder lichtreflektierende Partikel oder Kavitäten umfassen.

Im vorliegenden Ausführungsbeispiel hier beispielsweise das Lichtauskopplungsmittel 6 als ein Aufdruck aus feinen lichtstreuenden Partikeln auf die Hauptoberfläche III der ersten Scheibe 1 ausgebildet. Durch diese wird die Totalreflexion des Lichtstrahls L1 an der Grenzfläche zwischen erster Scheibe 1 und umgebender Luft unterbrochen und Licht durch Streuung aus der ersten Scheibe 1 ausgekoppelt.

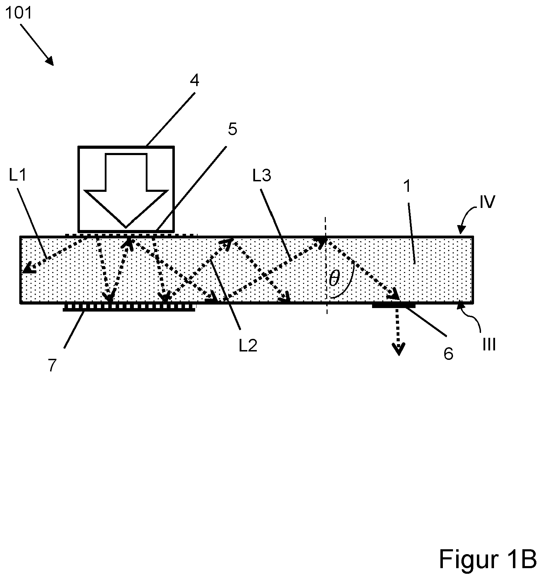

Figur 1B zeigt eine erfindungsgemäße Weiterbildung der Verglasung 101 aus Figur 1A. Die Verglasung 101 der Figur 1B hat einen ähnlichen Aufbau wie die Verglasung 101 aus Figur 1A, so dass im Folgenden nur auf die Unterschiede eingegangen wird und ansonsten auf die Beschreibung zur Figur 1A verwiesen wird.

Im Unterschied zur Figur 1A weist die Verglasung 101 aus Figur 1B ein Lichtverstärkungsmittel 7 auf, welches bezüglich der ersten Scheibe 1 der Lichtquelle 4 gegenüberliegend angeordnet ist. Das Lichtverstärkungsmittel 7 hat die Aufgabe, einen Großteil des Lichts, welches unter einem Winkel θ < θₜₒₜₐₗ in die erste Scheibe 1 eindringt und aufgrund mangelnder Totalreflexion an der der Eintrittsfläche gegenüberliegende Grenzfläche (hier Hauptoberfläche III) sofort wieder austritt, in die erste Scheibe 1 zurückzulenken, bevorzugt unter einem Winkel θ ≥ θₜₒₜₐₗ. Dabei nutzt das Lichtverstärkungsmittel 7 bevorzugt Mechanismen der Reflexion, Lichtbrechung, Beugung und/oder Streuung.

Im Ausgestaltungsbeispiel nach Figur 1B besteht das Lichtverstärkungsmittel 7 beispielsweise aus einem Spiegelelement, welches auf die Hauptoberfläche III der ersten Scheibe 1 über eine doppelseitige Klebefolie aufgeklebt ist. Das Spiegelelement ist beispielsweise eine Metallfolie, eine metallisierte Kunststofffolie oder eine nicht-metallische Enhanced Specular Reflector-Folie (3M ESR), wie sie beispielsweise von der Firma 3M vertrieben wird. Durch das Aufkleben mit einer doppelseitigen Klebefolie, die aufgrund der Klebemasse nicht perfekt planparallel ist, sondern eine gewisse Oberflächenkorrugation aufweist, wird nur ein Teil des Lichts direkt zurückreflektiert und ein anderer Teil in seinem Winkel θ verändert.

In Figur 1B sind beispielhaft die Pfade mehrerer Lichtstrahlen L1, L2, L3 eingezeichnet. Der Lichtstrahl L1 wird durch Streuung am Lichteinkopplungsmittel 5 unter einem Winkel θ ≥ θₜₒₜₐₗ in die erste Scheibe 1 eingekoppelt und propagiert aufgrund der Totalreflexion nahezu ungehindert durch die erste Scheibe 1. Der Lichtstrahl L2 tritt unter einem Winkel θ < θₜₒₜₐₗ in die erste Scheibe 1 und verlässt diese wieder an der gegenüberliegenden Hauptoberfläche III. Dort wird der Lichtstrahl L2 beispielsweise unter einem veränderten Winkel θ ≥ θₜₒₜₐₗ in die erste Scheibe 1 zurückgelenkt und propagiert nun aufgrund der Totalreflexion nahezu ungehindert durch die erste Scheibe 1. Mit deutlich geringerer Wahrscheinlichkeit ist der Pfad des Lichtstrahls L3 möglich. Der Lichtstrahl L3 tritt ebenfalls unter einem Winkel θ < θₜₒₜₐₗ in die erste Scheibe 1 und verlässt diese wieder an der gegenüberliegenden Hauptoberfläche III. Dort wird der Lichtstrahl L3 durch das reflektierende Lichtverstärkungsmittel 7 beispielsweise unter einen Winkel θ < θₜₒₜₐₗ in die erste Scheibe 1 zurückgelenkt und trifft nun von der Scheibenseite aus erneut auf das Lichteinkopplungsmittel 5. Dort kann der Lichtstrahl L3 beispielsweise vom Lichteinkopplungsmittel 5 gestreut werden und unter einem Winkel θ ≥ θₜₒₜₐₗ in die erste Scheibe 1 zurückgelenkt werden. Dort propagiert der Lichtstrahl L3 nun aufgrund der Totalreflexion nahezu ungehindert durch die erste Scheibe 1.

Durch das Lichtverstärkungsmittel 7 wird die Intensität des unter Totalreflexion in die erste Scheibe 1 eingekoppelten Lichts und damit auch die Intensität des auskoppelbaren Lichts deutlich erhöht.

Figur 2A zeigt eine lichtmikroskopische Aufnahme eines Ausgestaltungsbeispiels eines erfindungsgemäßen Lichteinkopplungsmittels 5. Die Aufnahme zeigt einen vergrößerten Ausschnitt der Hauptoberfläche IV der ersten Scheibe 1, in die das Lichteinkopplungsmittel 5 durch Laserstrukturierung eingebracht ist. Dazu wurde ein Liniengitter mit einer Periodizität von 1 µm und einer Grabentiefe von 100 nm in die Oberfläche strukturiert. Dazu wurde ein Kurz-Puls-Laser und linienförmig über die Hauptoberfläche IV bewegt.

Figur 2B zeigt eine lichtmikroskopische Aufnahme eines weiteren Ausgestaltungsbeispiels eines erfindungsgemäßen Lichteinkopplungsmittels 5. Die Aufnahme zeigt einen vergrößerten Ausschnitt der Hauptoberfläche IV der ersten Scheibe 1, in die das Lichteinkopplungsmittel 5 durch Laserstrukturierung eingebracht ist. Dabei wurde eine diffus-streuende Oberflächenstrukturierung durch lokales Abtragen in die Oberfläche eingebracht. Dazu wurde ein Kurz-Puls-Laser mit einer Leistung von 10 Watt rasterförmig über die Hauptoberfläche IV bewegt.

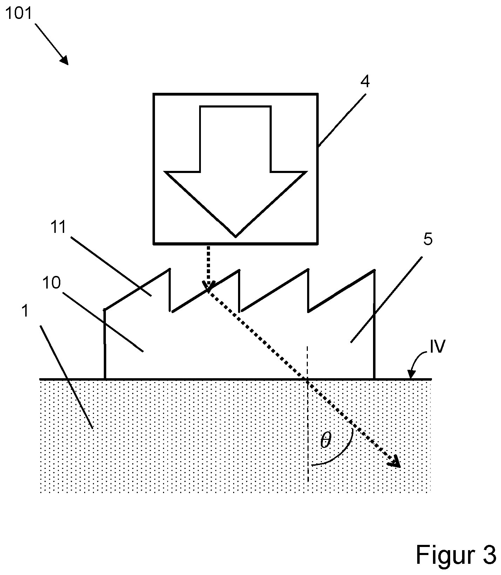

Figur 3 zeigt eine Detailansicht einer schematischen Querschnittsdarstellung einer weiteren erfindungsgemäßen Verglasung mit einem transparenten Körper 10 als Lichteinkopplungsmittel 5. Die der Lichtquelle 4 zugewandte Oberfläche des transparenten Körpers 10 weist dabei ein Stufenprisma 11 auf, welches dazu geeignet ist, einen Großteil des Lichts aus der Lichtquelle 4 zu brechen und unter einem Winkel θ ≥ θₜₒₜₐₗ in die erste Scheibe 1 einzukoppeln. Dazu ist die Scheibenkontaktfläche des transparenten Körpers 10 plan ausgebildet und unmittelbar auf die Hauptoberfläche IV der ersten Scheibe 1 geklebt. Der transparente Körper 10 besteht beispielsweise aus einem Kunststoff und insbesondere aus einem Photopolymer, in welches durch geeignete Mikrostukturierungs- oder Belichtungsverfahren das Stufenprisma 11 eingebracht ist. Für eine optimale Einkopplung des Lichts, wird ein transparenter Körper 10 mit einer an den Brechungsindex n₁ der erste Scheibe 1 angepassten Brechungsindex n₁₀ verwendet, wobei der Brechungsindex n₁₀ vom Brechungsindex n₁ um maximal 0,3 abweicht.

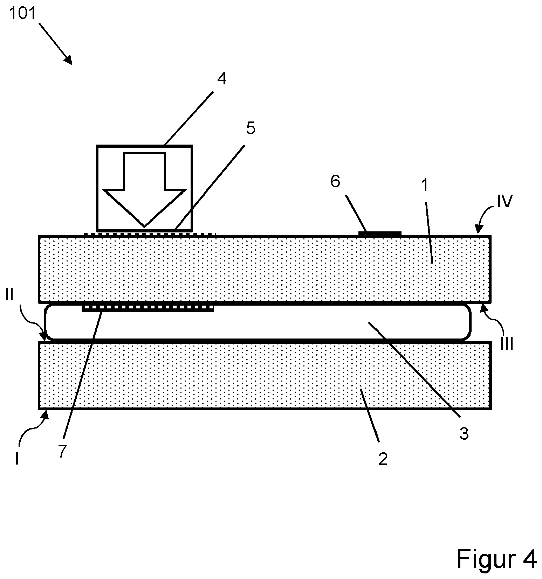

Figur 4 zeigt eine schematische Querschnittsdarstellung einer weiteren Ausgestaltung einer erfindungsgemäßen Verglasung am Beispiel einer Verbundscheibe. Figur 4 zeigt eine erfindungsgemäße Weiterbildung der Verglasung 101 aus Figur 1B. Die Verglasung 101 der Figur 1B hat einen ähnlichen Aufbau wie die Verglasung 101 aus Figur 4, so dass im Folgenden nur auf die Unterschiede eingegangen wird und ansonsten auf die Beschreibung zur Figur 1B verwiesen wird.

Im Unterschied zur Verglasung 101 aus Figur 1B ist in Figur 4 die erste Scheibe 1 über eine Zwischenschicht 3 mit einer zweiten Scheibe 2 durch Lamination, beispielsweise in einem Autoklaven, verbunden. Die Zwischenschicht 3 ist dabei einerseits fest mit der Hauptoberfläche III der ersten Scheibe 1 und auf der gegenüberliegenden Seite mit der Hauptoberfläche II der zweiten Scheibe 1 verbunden.

Die Abmessungen der Verglasung 101 betragen beispielsweise 1,6 m x 1,5 m. Die erste Scheibe 1 ist beispielsweise dafür vorgesehen, in Einbaulage dem Innenraum eines Fahrzeugs zugewandt zu sein. Das heißt, die erste Hauptoberfläche IV der ersten Scheibe 1 ist vom Innenraum aus zugänglich, wogegen die vierte Hauptoberfläche I der zweiten Scheibe 2 bezüglich des Fahrzeuginnenraums nach außen weist. Erste Scheibe 1 und zweite Scheibe 2 bestehen beispielsweise aus Kalk-Natronglas. Die Dicke der ersten Scheibe 1 beträgt beispielsweise 1,6 mm und die Dicke der zweiten Scheibe 2 beträgt beispielsweise 2,1 mm. Es versteht sich, dass erste Scheibe 1 und zweite Scheibe 2 beliebige Dicken aufweisen können und beispielsweise auch gleich dick ausgebildet sein können. Die Zwischenschicht 3 besteht bevorzugt aus einer akustik-dämpfenden 3-lagigen PVB-Folie. Die Scheiben 1,2 und die Zwischenschicht 3 sind beispielsweis klar, d.h. weder getönt noch gefärbt.

Das Lichteinkopplungsmittel 5 besteht in diesem Beispiel aus einem transparenten Körper 10, der eine Kunststofffolie 12 enthält, welche mit der Hauptoberfläche IV der ersten Scheibe 1 verklebt ist. Die Kunststofffolie 12 ist beispielsweise mit lichtstreuenden Partikel bedruckt, die das Licht der Lichtquelle 4 diffus streut.

Das Lichtauskopplungsmittel 6 ist hier beispielsweise auf der ersten Hauptoberfläche IV der ersten Scheibe 1 angeordnet. Es versteht sich, dass es auch auf der zweiten Hauptoberfläche III der ersten Scheibe 1 oder innerhalb der ersten Scheibe 1 angeordnet sein kann. Im Beispiel nach Figur 4 ist das Lichtverstärkungsmittel 7 unmittelbar an der zweiten Hauptoberfläche III der ersten Scheibe 1 angeordnet. Des Weiteren ist das Lichtverstärkungsmittel 7 über die Zwischenschicht 3 mit der dritten Hauptoberfläche II der zweiten Scheibe 2 verbunden. Es versteht sich, dass eine erfindungsgemäße Verglasung auch mehrere Lichtquellen 4, mehrere Lichteinkopplungsmittel 5, mehrere Lichtauskopplungsmittel 6 und mehrere Lichtverstärkungsmittel 7 aufweisen kann.

Die in Figur 4 gezeigte Verglasung 101 eignet sich besonders gut als Dachscheibe eines Kraftfahrzeugs.

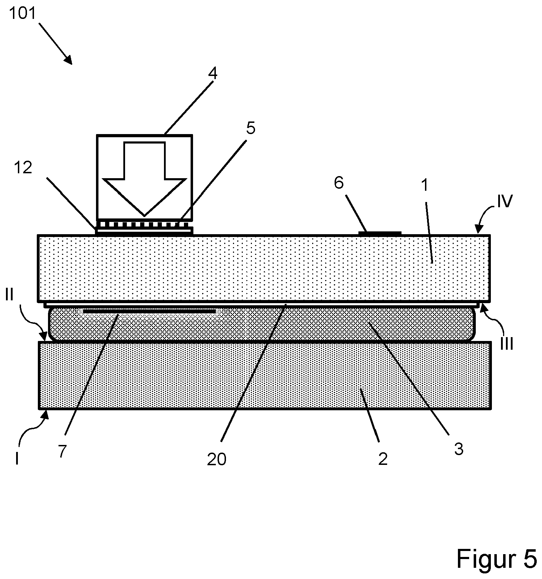

Figur 5 zeigt eine schematische Querschnittsdarstellung einer weiteren Ausgestaltung einer erfindungsgemäßen Verglasung 101. Figur 5 zeigt eine erfindungsgemäße Weiterbildung der Verglasung 101 aus Figur 4. Die Verglasung 101 der Figur 5 hat einen ähnlichen Aufbau wie die Verglasung 101 aus Figur 4, so dass im Folgenden nur auf die Unterschiede eingegangen wird und ansonsten auf die Beschreibung zur Figur 4 verwiesen wird.

Im Unterschied zur Verglasung 101 aus Figur 4 besteht in Figur 5 die Zwischenschicht 3 aus mindestens einer getönten oder gefärbten PVB-Folie. Des Weiteren ist die zweite Scheibe 2 ebenfalls dunkel getönt. Das Lichtverstärkungsmittel 7 ist hier analog zur Figur 4 zwischen der ersten Scheibe 1 und der Zwischenschicht 3 angeordnet.

Wie Untersuchungen der Erfinder ergaben, sinkt die Intensität des über das Lichtauskopplungsmittel 6 ausgekoppelten Lichts durch die Anwesenheit einer getönten Zwischenschicht 3 im Vergleich zu einer Verglasung 101 mit klarer Zwischenschicht 3 (siehe beispielsweise Figur 4). Abhilfe schafft eine die Totalreflexion erhaltende Beschichtung 20 (beispielsweise eine Anti-Reflex-Beschichtung mit geeignetem Brechungsindex n₂₀), die unmittelbar auf der Hauptoberfläche III der ersten Scheibe 1 angeordnet ist. Der Brechungsindex n₂₀ der Beschichtung 20 ist dabei kleiner als der Brechungsindex n₁ der ersten Scheibe 1. Bevorzugt beträgt die Differenz n₁ - n₂₀ größer oder gleich 0,1, besonders bevorzugt größer oder gleich 0,2. Im vorliegenden Beispiel ist die Beschichtung 20 beispielsweise eine Anti-Reflex-Beschichtung aus porösem SiO2 mit einem Brechungsindex n₂₀ von beispielsweise 1,25, welche beispielsweise mittels einem Sol-Gel-Verfahren hergestellt wird.

### Bezugszeichenliste

- 1: erste Scheibe
- 2: zweite Scheibe
- 3: Zwischenschicht
- 4: Lichtquelle
- 5: Lichteinkopplungsmittel
- 6: Lichtauskopplungsmittel
- 7: Lichtverstärkungsmittel
- 10: transparenter Körper oder reflektierender Körper
- 11: Stufenprisma
- 12: Kunststofffolie
- 20: Beschichtung
- 101: Verglasung
- L1, L2, L3: Lichtstrahl
- θ: Winkel (theta)
- θₜₒₜₐₗ: Winkel (theta) der Totalreflexion
- n₁: Brechungsindex der ersten Scheibe 1
- n₁₀: Brechungsindex des transparenten oder reflektierenden Körpers 10
- n₂₀: Brechungsindex der Beschichtung 20

- I: vierte Hauptoberfläche, außenseitige Oberfläche der zweiten Scheibe 2
- II: dritte Hauptoberfläche, innenseitige Oberfläche der zweiten Scheibe 2
- III: zweite Hauptoberfläche, innenseitigen Oberfläche des ersten Scheibe 1
- IV: erste Hauptoberfläche, außenseitigen Oberfläche des ersten Scheibe 1

## Patentansprüche

1. Verglasung (101) umfassend:
- mindestens eine erste Scheibe (1) mit einer ersten Hauptoberfläche (IV) und einer zweiten Hauptoberfläche (III),
- mindestens eine Lichtquelle (4),
- mindestens ein, bevorzugt transparentes, Lichteinkopplungsmittel (5), und
- mindestens ein Lichtauskopplungsmittel (6), zum Auskoppeln von Licht aus der ersten Scheibe (1) über mindestens eine der Hauptoberflächen (III, IV),
wobei
- die Lichtquelle (4) über das Lichteinkopplungsmittel (5) mit der ersten Hauptoberfläche (IV) der ersten Scheibe (1) verbunden ist, so dass Licht der Lichtquelle (4) in die erste Scheibe (1) eingekoppelt werden kann,
- das Lichteinkopplungsmittel (5) dazu ausgebildet ist, einen Teil des von der Lichtquelle (4) eintreffenden Lichts in Transmission durch Streuung, bevorzugt diffuse Streuung, Reflexion, Brechung oder Beugung abzulenken und unter einem Winkel θ größer oder gleich dem Winkel θₜₒₜₐₗ der Totalreflexion in die erste Scheibe (1) einzukoppeln, und
**dadurch gekennzeichnet, dass**
- mindestens ein Lichtverstärkungsmittel (7) dem Lichteinkopplungsmittel (5) gegenüberliegend an der zweiten Hauptoberfläche (IV) der ersten Scheibe (1) und mindestens im Bereich der orthogonalen Projektion des Lichteinkopplungsmittels (5) auf die erste Scheibe (1) angeordnet ist.

2. Verglasung (101) nach Anspruch 1, wobei das Lichtverstärkungsmittel (7) nicht einstückig mit der ersten Scheibe (1) ausgebildet ist.

3. Verglasung (101) nach Anspruch 1 oder Anspruch 2, wobei eine zweite Scheibe (2) durch mindestens eine Zwischenschicht (3) mit der ersten Scheibe (1) verbunden ist.

4. Verglasung (101) nach einem der Ansprüche 1 bis 3, wobei die Lichtquelle (4) eine Leuchtdiode, eine Laserdiode, eine Glühlampe und/oder eine Gasentladungslampe enthält oder daraus besteht.

5. Verglasung (101) nach einem der Ansprüche 1 bis 4, wobei das Lichteinkopplungsmittel (5) dazu ausgebildet ist den Anteil des von der Lichtquelle (4) unter einem Winkel θ größer oder gleich dem Winkel θₜₒₜₐₗ der Totalreflexion in die erste Scheibe eingekoppelten Lichts um einen Faktor von mindestens 50 und insbesondere von mindestens 200 zu erhöhen.

6. Verglasung (101) nach einem der Ansprüche 1 bis 5, wobei das Lichteinkopplungsmittel (5)
- in die erste Hauptoberfläche (IV) der ersten Scheibe (1) eingebracht ist, bevorzugt durch Laserstrukturierung, mechanische Strukturierung wie Sandstrahlen, und/oder Ätzen, und/oder
- auf die erste Hauptoberfläche (IV) der ersten Scheibe (1) aufgedruckt ist, und/oder
- Teil der Lichtquelle (4) ist, und/oder
- ein transparenter Körper (10) ist, der mit der ersten Hauptoberfläche (IV) der ersten Scheibe (1) stoffschlüssig verbunden ist, beispielsweise durch Verkleben,
wobei der transparente Körper (10) bevorzugt
o eine strukturierte Kunststofffolie (12) oder Kunststoffplatte, besonders bevorzugt mit einer flächigen Anordnung von Mikroprismen wie einem Stufenprisma (11), oder
o eine holographische Folie enthält oder daraus besteht, und
wobei besonders bevorzugt für den Brechungsindex n₁ der ersten Scheibe (1) und den Brechungsindex n₁₀ des transparenten Körpers (10) gilt: n₁₀ beträgt von n₁ - 0,3 bis n₁ + 0,3, noch mehr bevorzugt von n₁ - 0,2 bis n₁ + 0,2 und insbesondere von n₁ - 0,15 bis n₁ + 0,15.

7. Verglasung (101) nach einem der Ansprüche 1 bis 6, wobei das Lichtauskopplungsmittel (6) zur Lichtauskopplung von in der ersten Scheibe (1) geleiteten Lichts, bevorzugt durch Streuung, bevorzugt diffuse Streuung, Reflexion, Brechung oder Beugung, an wenigstens einer der Hauptoberflächen (III, IV) der ersten Scheibe (1) ausgebildet ist.

8. Verglasung (101) nach einem der Ansprüche 1 bis 7, wobei das Lichtauskopplungsmittel (6)
• in die erste Hauptoberfläche (IV) und/oder in die zweite Hauptoberfläche (III) eingebracht ist, bevorzugt durch Laserstrukturierung, mechanische Strukturierung wie Sandstrahlen, oder durch Ätzen, und/oder
• mit der ersten Hauptoberfläche (IV) und/oder mit der zweiten Hauptoberfläche (III) der ersten Scheibe (1) stoffschlüssig verbunden ist, bevorzugt durch Aufdrucken oder Aufkleben einer Farbe, einer Paste oder von Partikeln, besonders bevorzugt durch lichtstreuende, lichtbrechende oder lichtreflektierende Partikel, und/oder
• innerhalb der ersten Scheibe (1) angeordnet ist, bevorzugt durch Partikel besonders bevorzugt durch lichtstreuende, lichtbrechende oder lichtreflektierende Partikel, und/oder Kavitäten innerhalb der ersten Scheibe (1), und/oder
• ein transparenter Körper (10) ist, der beispielsweise mit der ersten Hauptoberfläche (IV) der ersten Scheibe (1), bevorzugt stoffschlüssig, verbunden ist, beispielsweise durch Verkleben, wobei der transparente Körper (10) bevorzugt
a) eine strukturierte Kunststofffolie (12) oder Kunststoffplatte, besonders bevorzugt mit einer flächigen Anordnung von Mikroprismen wie einem Stufenprisma (11), oder
b) eine transmissions-holographische Folie enthält oder daraus besteht, und/oder
• ein reflektierender Körper (10) ist, der beispielsweise mit der zweiten Hauptoberfläche (III) der ersten Scheibe (1), bevorzugt stoffschlüssig, verbunden ist, beispielsweise durch Verkleben,
wobei der reflektierende Körper (10) bevorzugt
a) eine strukturierte Kunststofffolie (12) oder Kunststoffplatte, besonders bevorzugt mit einer flächigen Anordnung von Mikroprismen wie einem Stufenprisma (11), oder
b) eine reflexions-holographische Folie enthält oder daraus besteht,
und/oder
• ein transparenter Körper (10) ist, der beispielsweise mit der ersten Hauptoberfläche (IV) der ersten Scheibe (1), bevorzugt stoffschlüssig, verbunden ist, beispielsweise durch Verkleben,
wobei der transparente Körper (10) bevorzugt eine strukturierte, besonders bevorzugt eine diffus-streuende oder, beispielsweise durch Mikroprismen, gerichtet-brechende, transparente Schicht, Kunststofffolie (12) oder Kunststoffplatte aufweist oder daraus besteht
und deren Brechungsindex n_{10'} wesentlich größer als n₁ ist, insbesondere um mindestens +0,2 oder um mindestens +0,5.

9. Verglasung (101) nach einem der Ansprüche 2 bis 8, wobei das Lichtverstärkungsmittel (7) aus der ersten Scheibe (1) austretendes Licht durch Reflexion, bevorzugte gerichtete Reflexion, Streuung, bevorzugt diffuse Streuung, oder Beugung in die erste Scheibe (1) zurücklenkt, besonders bevorzugt unter einem Winkel θ größer oder gleich dem Winkel θₜₒₜₐₗ der Totalreflexion.

10. Verglasung (101) nach einem der Ansprüche 2 bis 9, wobei das Lichtverstärkungsmittel (7) unmittelbar oder über mindestens eine Zwischenschicht oder über mindestens eine Klebeschicht mit der zweiten Hauptoberfläche (IV) der ersten Scheibe (1) stoffschlüssig verbunden ist.

11. Verglasung (101) nach einem der Ansprüche 2 bis 10, wobei das Lichtverstärkungsmittel (7) eine Metallfolie, eine metallisierte Kunststofffolie oder eine nicht-metallische Enhanced Specular Reflector-Folie enthält oder daraus besteht.

12. Verglasung (101) nach einem der Ansprüche 1 bis 11, wobei zumindest abschnittsweise, bevorzugt vollflächig, und unmittelbar auf der zweiten Hauptoberfläche (II) der ersten Scheibe (1) eine halbdurchlässig-spiegelnde Beschichtung (20) angeordnet ist.

13. Verglasung (101) nach einem der Ansprüche 1 bis 12, wobei die erste Scheibe (1) und/oder die zweite Scheibe (2) Glas, bevorzugt Flachglas, besonders bevorzugt Kalk-Natron-Glas, Borosilikatglas oder Quarzglas, oder Polymere, bevorzugt Polyethylen, Polypropylen, Polycarbonat, Polymethylmethacrylat und/oder Gemische oder Kombinationen davon enthält oder daraus besteht und besonders bevorzugt die erste Scheibe (1) aus Klarglas besteht und die zweite Scheibe (2) getönt oder gefärbt ist.

14. Verglasung (101) nach einem der Ansprüche 3 bis 13, wobei die Zwischenschicht (3) mindestens eine thermoplastische Kunststofffolie, bevorzugt aus Polyvinylbutyral, enthält oder daraus besteht und besonders bevorzugt die Zwischenschicht (3) klar, getönt oder gefärbt ist.

15. Verglasungsanordnung umfassend eine Verglasung (101) nach einem der Ansprüche 1 bis 14, und einer Spannungsquelle oder Steuerelektronik, die mit der Lichtquelle (4) verbunden ist und bevorzugt die Lichtquelle (4) Licht aussendet.

16. Verfahren zur Herstellung einer Verglasung (101) nach einem der Ansprüche 1 bis 14, mindestens umfassend:
• Anordnen eines, bevorzugt lichtstreuenden, lichtreflektierenden, lichtbrechenden oder lichtbeugenden, Lichteinkopplungsmittels (5) auf einer ersten Hauptoberfläche (IV) einer ersten Scheibe (1), bevorzugt durch Laserstrukturierung, mechanische Strukturierung wie Sandstrahlen, Ätzen, Beschichten, Bedrucken oder Aufkleben eines transparenten Körpers (10),
• Anordnen von mindestens einer Lichtquelle (4) am Lichteinkopplungsmittel (5) sowie Anordnen von mindestens einem Lichtauskopplungsmittel (6) an oder in der ersten Scheibe (1).

17. Verwendung der Verglasung (1) nach einen der Ansprüche 1 bis 14 oder einer Verglasungsanordnung nach Anspruch 15 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe sowie als funktionales Einzelstück, und als Einbauteil in Möbeln, Geräten und Gebäuden, oder als Gebäudeverglasung im Baubereich oder Architekturbereich im Innenbereich oder Außenbereich.

## Claims

1. Glazing (101) comprising:
- at least a first pane (1) having a first main surface (IV) and a second main surface (III),
- at least one light source (4),
- at least one, preferably transparent, light in-coupling means (5), and
- at least one light out-coupling means (6) for coupling light out of the first pane (1) via at least one of the main surfaces (III, IV),
wherein
- the light source (4) is connected to the first main surface (IV) of the first pane (1) via the light in-coupling means (5), so that light from the light source (4) can be coupled into the first pane (1),
- the light in-coupling means (5) is designed to deflect a part of the light arriving from the light source (4) in transmission by scattering, preferably diffuse scattering, reflection, refraction or diffraction and to couple it into the first pane (1) at an angle θ greater than or equal to the angle θ ₜₒₜₐₗ of the total reflection, and
**characterized in that**
- at least one light amplification means (7) is arranged opposite the light in-coupling means (5) on the second main surface (IV) of the first pane (1) and at least in the region of the orthogonal projection of the light in-coupling means (5) onto the first pane (1).

2. Glazing (101) according to claim 1, wherein the light amplification means (7) is not formed integrally with the first pane (1).

3. Glazing (101) according to claim 1 or claim 2, wherein a second pane (2) is connected to the first pane (1) by at least one intermediate layer (3).

4. Glazing (101) according to any of claims 1 to 3, wherein the light source (4) contains or consists of a light-emitting diode, a laser diode, an incandescent lamp and/or a gas discharge lamp.

5. Glazing (101) according to any of claims 1 to 4, wherein the light in-coupling means (5) is designed to increase the proportion of the light coupled into the first pane by the light source (4) at an angle θ greater than or equal to the angle θ ₜₒₜₐₗ of the total reflection by a factor of at least 50, and in particular at least 200.

6. Glazing (101) according to any of claims 1 to 5, wherein the light in-coupling means (5)
- is introduced into the first main surface (IV) of the first pane (1), preferably by laser structuring, mechanical structuring such as sandblasting, and/or etching, and/or
- is printed on the first main surface (IV) of the first pane (1), and/or
- is part of the light source (4), and/or
- is a transparent body (10) which is integrally bonded to the first main surface (IV) of the first pane (1), for example by gluing,
wherein the transparent body (10) preferably contains or consists of
o a structured plastic film (12) or plastic plate, particularly preferably with a planar arrangement of microprisms such as a step prism (11), or
∘ a holographic foil, and
wherein particularly preferably for the refractive index n₁ of the first pane (1) and the refractive index n₁₀ of the transparent body (10), the following applies: n₁₀ is from n₁ - 0.3 to n₁ + 0.3, even more preferably from n₁ - 0.2 to n₁ + 0.2 and in particular from n₁ - 0.15 to n₁ + 0.15.

7. Glazing (101) according to any of claims 1 to 6, wherein the light out-coupling means (6) is designed to couple out light guided in the first pane (1), preferably by scattering, preferably diffuse scattering, reflection, refraction or diffraction, on at least one of the main surfaces (III, IV) of the first pane (1).

8. Glazing (101) according to any of claims 1 to 7, wherein the light out-coupling means (6)
• is introduced into the first main surface (IV) and/or into the second main surface (III), preferably by laser structuring, mechanical structuring such as sandblasting, or by etching, and/or
• is integrally bonded to the first main surface (IV) and/or the second main surface (III) of the first pane (1), preferably by printing or gluing of a colorant, a paste or particles, particularly preferably by light-scattering, light-refracting or light-reflecting particles, and/or
• is arranged within the first pane (1), preferably by particles, particularly preferably by light-scattering, light-refracting or light-reflecting particles and/or cavities within the first pane (1), and/or
• is a transparent body (10) which is preferably integrally bonded for example to the first main surface (IV) of the first pane (1), for example by gluing, wherein the transparent body (10) preferably contains or consists of
a) a structured plastic film (12) or plastic plate, particularly preferably with a planar arrangement of microprisms such as a step prism (11), or
b) a transmission-holographic foil,
and/or
• is a reflective body (10) which is preferably integrally bonded for example to the second main surface (III) of the first pane (1), for example by gluing,
wherein the reflective body (10) preferably contains or consists of
a) a structured plastic film (12) or plastic plate, particularly preferably with a planar arrangement of microprisms such as a step prism (11), or
b) a reflection-holographic foil,
and/or
• is a transparent body (10) which is preferably integrally bonded for example to the first main surface (IV) of the first pane (1), for example by gluing,
wherein the transparent body (10) preferably has or consists of a structured, particularly preferably a diffusely scattering or, for example by microprisms, directionally refracting, transparent layer, plastic film (12) or plastic plate
and the refractive index n₁₀ of which is significantly greater than n₁, in particular by at least +0.2 or by at least +0.5.

9. Glazing (101) according to any of claims 2 to 8, wherein the light amplification means (7) directs light emerging from the first pane (1) back into the first pane (1) by reflection, preferably directional reflection, scattering, preferably diffuse scattering, or diffraction, particularly preferably at an angle θ greater than or equal to the angle θ ₜₒₜₐₗ of the total reflection.

10. Glazing (101) according to any of claims 2 to 9, wherein the light amplification means (7) is integrally bonded to the second main surface (IV) of the first pane (1) directly or via at least one intermediate layer or via at least one adhesive layer.

11. Glazing (101) according to any of claims 2 to 10, wherein the light amplification means (7) contains or consists of a metal foil, a metallized plastic foil or a non-metallic enhanced specular reflector foil.

12. Glazing (101) according to any of claims 1 to 11, wherein a semi-transparently reflective coating (20) is arranged at least in portions, preferably over the entire surface, directly on the second main surface (II) of the first pane (1).

13. Glazing (101) according to any of claims 1 to 12, wherein the first pane (1) and/or the second pane (2) contains or consists of glass, preferably flat glass, particularly preferably soda lime glass, borosilicate glass or quartz glass, or polymers, preferably polyethylene, polypropylene, polycarbonate, polymethyl methacrylate and/or mixtures or combinations thereof, and particularly preferably the first pane (1) consists of clear glass and the second pane (2) is tinted or colored.

14. Glazing (101) according to any of claims 3 to 13, wherein the intermediate layer (3) contains or consists of at least one thermoplastic film, preferably made of polyvinyl butyral, and particularly preferably the intermediate layer (3) is clear, tinted or colored.

15. Glazing arrangement comprising a glazing (101) according to any of claims 1 to 14, and a voltage source or control electronics connected to the light source (4), and preferably the light source (4) emits light.

16. Method for producing glazing (101) according to any of claims 1 to 14, at least comprising:
• arranging a preferably light-scattering, light-reflecting, light-refracting or light-diffracting light in-coupling means (5) on a first main surface (IV) of a first pane (1), preferably by laser structuring, mechanical structuring such as sandblasting, etching, coating, printing or adhering a transparent body (10),
• arranging at least one light source (4) on the light in-coupling means (5) and arranging at least one light out-coupling means (6) on or in the first pane (1).

17. Use of the glazing (1) according to any of claims 1 to 14 or a glazing arrangement according to claim 15 in means of transportation for travel on land, in the air, or on water, in particular in motor vehicles, for example as a windshield, rear window, side windows and/or roof pane, as well as a functional individual piece, and as a built-in component in furniture, devices, and buildings, or as building glazing in the construction sector or the architectural sector indoors or outdoors.

## Revendications

1. Vitrage (101) comprenant :
- au moins une première vitre (1) comportant une première surface principale (IV) et une seconde surface principale (III),
- au moins une source lumineuse (4),
- au moins un moyen de couplage de lumière (5), de préférence transparent, et
- un moyen de découplage de lumière (6) pour le découplage de la lumière de la première vitre (1) par l'intermédiaire d'au moins l'une des deux surfaces principales (III, IV),
dans lequel
- la source lumineuse (4) est reliée à la première surface principale (IV) de la première vitre (1) par l'intermédiaire du moyen de couplage de lumière (5), de sorte que la lumière de la source lumineuse (4) peut être couplée dans la première vitre (1),
- le moyen de couplage de lumière (5) est configuré pour dévier une partie de la lumière arrivant de la source lumineuse (4) en transmission par diffusion, de préférence par diffusion diffuse, réflexion, réfraction ou diffraction, et pour la coupler dans la première vitre (1) selon un angle θ supérieur ou égal à l'angle θₜₒₜₐₗ de la réflexion totale, et
**caractérisé en ce que**
- au moins un moyen d'amplification de lumière (7) est disposé en face du moyen de couplage de lumière (5) sur la seconde surface principale (IV) de la première vitre (1) et au moins dans la zone de la projection orthogonale du moyen de couplage de lumière (5) sur la première vitre (1).

2. Vitrage (101) selon la revendication 1, dans lequel le moyen d'amplification de lumière (7) n'est pas réalisé d'un seul tenant avec la première vitre (1).

3. Vitrage (101) selon la revendication 1 ou la revendication 2, dans lequel une seconde vitre (2) est reliée à la première vitre (1) au moyen d'au moins une couche intermédiaire (3).

4. Vitrage (101) selon l'une des revendications 1 à 3, dans lequel la source lumineuse (4) comprend une diode électroluminescente, une diode laser, une lampe à incandescence et/ou une lampe à décharge ou est constituée de celles-ci.

5. Vitrage (101) selon l'une des revendications 1 à 4, dans lequel le moyen de couplage de lumière (5) est configuré pour augmenter d'un facteur d'au moins 50 et en particulier d'au moins 200 la proportion de la lumière provenant de la source lumineuse (4) et couplée dans la première vitre selon un angle θ supérieur ou égal à l'angle θₜₒₜₐₗ de la réflexion totale.

6. Vitrage (101) selon l'une des revendications 1 à 5, dans lequel le moyen de couplage de lumière (5)
- est introduit dans la première surface principale (IV) de la première vitre (1), de préférence par structuration au laser, structuration mécanique telle que sablage, et/ou gravure, et/ou
- est imprimé sur la première surface principale (IV) de la première vitre (1), et/ou
- fait partie de la source lumineuse (4), et/ou
- est un corps transparent (10) qui est relié à la première surface principale (IV) de la première vitre (1) par liaison de matière, par exemple par collage,
dans lequel le corps transparent (10) contient de préférence
∘ un film en plastique structuré (12) ou une plaque en plastique, de manière particulièrement préférée comportant une disposition plane de microprismes comme un prisme à échelons (11), ou
∘ un film holographique, ou est de préférence constitué de celui-ci, et
dans lequel, de manière particulièrement préférée, pour l'indice de réfraction n₁ de la première vitre (1) et l'indice de réfraction n₁₀ du corps transparent (10), ceci s'applique : n₁₀ va de n₁ - 0,3 à n₁ + 0,3, de manière encore plus préférée de n₁ - 0,2 à n₁ + 0,2 et en particulier de n₁ - 0,15 à n₁ + 0,15.

7. Vitrage (101) selon l'une des revendications 1 à 6, dans lequel le moyen de découplage de lumière (6) est configuré pour le découplage de lumière de la lumière guidée dans la première vitre (1), de préférence par diffusion, de préférence par diffusion diffuse, réflexion, réfraction ou diffraction, sur au moins l'une des surfaces principales (III, IV) de la première vitre (1).

8. Vitrage (101) selon l'une des revendications 1 à 7, dans lequel le moyen de découplage de lumière (6)
• est introduit dans la première surface principale (IV) et/ou dans la seconde surface principale (III), de préférence par structuration au laser, structuration mécanique telle que sablage, ou par gravure, et/ou
• est relié par liaison de matière à la première surface principale (IV) et/ou à la seconde surface principale (III) de la première vitre (1), de préférence par impression ou collage d'une encre, d'une pâte ou de particules, de manière particulièrement préférée par des particules diffusant la lumière, réfringentes ou réfléchissant la lumière, et/ou
• est disposé à l'intérieur de la première vitre (1), de préférence par des particules, de manière particulièrement préférée par des particules diffusant la lumière, réfringentes ou réfléchissant la lumière, et/ou des cavités à l'intérieur de la première vitre (1), et/ou
• est un corps transparent (10) qui est relié par exemple à la première surface principale (IV) de la première vitre (1), de préférence par liaison de matière, par exemple par collage, dans lequel le corps transparent (10) contient de préférence
a) un film en plastique structuré (12) ou une plaque en plastique, de manière particulièrement préférée comportant une disposition plane de microprismes comme un prisme à échelons (11), ou
b) un film holographique de transmission, ou est de préférence constitué de celui-ci,
et/ou
• est un corps réfléchissant (10) qui est par exemple relié à la seconde surface principale (III) de la première vitre (1), de préférence par liaison de matière, par exemple par collage,
dans lequel le corps réfléchissant (10) contient de préférence
a) un film en plastique structuré (12) ou une plaque en plastique, de manière particulièrement préférée comportant une disposition plane de microprismes comme un prisme à échelons (11), ou
b) un film holographique réfléchissant, ou est de préférence constitué de celui-ci,
et/ou
• est un corps transparent (10) qui est par exemple relié à la première surface principale (IV) de la première vitre (1), de préférence par liaison de matière, par exemple par collage,
dans lequel le corps transparent (10) présente de préférence une couche, un film en plastique (12) ou une plaque en plastique transparent et structuré, de manière particulièrement préférée à diffusion diffuse ou à réfraction dirigée, par exemple par des microprismes, ou est constitué de celui -ci,
et dont l'indice de réfraction n₁₀ est sensiblement supérieur à n₁, en particulier d'au moins +0,2 ou d'au moins +0,5.

9. Vitrage (101) selon l'une des revendications 2 à 8, dans lequel le moyen d'amplification de lumière (7) renvoie la lumière sortant de la première vitre (1) dans la première vitre (1) par réflexion, de préférence par réflexion dirigée, par diffusion, de préférence par diffusion diffuse, ou par diffraction, de manière particulièrement préférée selon un angle θ supérieur ou égal à l'angle θₜₒₜₐₗ de la réflexion totale.

10. Vitrage (101) selon l'une des revendications 2 à 9, dans lequel le moyen d'amplification de lumière (7) est relié par liaison de matière à la seconde surface principale (IV) de la première vitre (1), directement ou par l'intermédiaire d'au moins une couche intermédiaire ou par l'intermédiaire d'au moins une couche adhésive.

11. Vitrage (101) selon l'une des revendications 2 à 10, dans lequel le moyen d'amplification de lumière (7) comprend un film métallique, un film en plastique métallisé ou un film de type réflecteur spéculaire amélioré non métallique ou est constitué de celui-ci.

12. Vitrage (101) selon l'une des revendications 1 à 11, dans lequel un revêtement semi-transparent réfléchissant (20) est disposé au moins dans certaines sections, de préférence sur toute la surface, et directement sur la seconde surface principale (II) de la première vitre (1).

13. Vitrage (101) selon l'une des revendications 1 à 12, dans lequel la première vitre (1) et/ou la seconde vitre (2) contiennent du verre, de préférence du verre plat, de manière particulièrement préférée du verre sodocalcique, du verre borosilicaté ou du verre de quartz, ou des polymères, de préférence du polyéthylène, du polypropylène, du polycarbonate, du polyméthacrylate de méthyle et/ou des mélanges ou des combinaisons de ceux-ci, ou sont constituées de celui-ci, et de manière particulièrement préférée la première vitre (1) est constituée de verre clair et la seconde vitre (2) est teintée ou colorée.

14. Vitrage (101) selon l'une des revendications 3 à 13, dans lequel la couche intermédiaire (3) comprend au moins un film en plastique thermoplastique, de préférence en polyvinylbutyral, ou est constituée de celui-ci, et de manière particulièrement préférée, la couche intermédiaire (3) est transparente, teintée ou colorée.

15. Agencement de vitrage comprenant un vitrage (101) selon l'une des revendications 1 à 14, et une source de tension ou une électronique de commande qui est connectée à la source lumineuse (4) et, de préférence, la source lumineuse (4) émet de la lumière.

16. Procédé pour la fabrication d'un vitrage (101) selon l'une des revendications 1 à 14, comprenant au moins :
• la disposition d'un moyen de couplage de lumière (5), de préférence diffusant la lumière, réfléchissant la lumière, réfringent ou diffractant la lumière, sur une première surface principale (IV) d'une première vitre (1), de préférence par structuration au laser, structuration mécanique telle que sablage, gravure, enduction, impression ou collage d'un corps transparent (10),
• la disposition d'au moins une source lumineuse (4) sur le moyen de couplage de lumière (5) ainsi que la disposition d'au moins un moyen de découplage de lumière (6) sur ou dans la première vitre (1).

17. Utilisation du vitrage (1) selon l'une des revendications 1 à 14 ou d'un agencement de vitrage selon la revendication 15 dans des moyens de déplacement pour la circulation terrestre, aérienne ou maritime, en particulier dans des véhicules automobiles, par exemple en tant que pare-brise, lunette arrière, vitres latérales et/ou vitre de toit ainsi qu'en tant que pièce individuelle fonctionnelle, et en tant qu'élément incorporé dans des meubles, appareils et bâtiments, ou en tant que vitrage de bâtiment dans le domaine de la construction ou de l'architecture à l'intérieur ou à l'extérieur.
